# EUROPEAN PATENT SPECIFICATION

(11) **EP 4 020 388 B1**
(45) Date of publication and mention of the grant of the patent: **04.11.2026**
(21) Application number: 20216578.3
(22) Date of filing: 22.12.2020
(51) Int. Cl.: G06T 7/246, G06T 3/40

(54) **REGIONAL SPATIAL ENHANCEMENT OF RGB-IR IMAGE**
REGIONALE RÄUMLICHE VERBESSERUNG EINES RGB-IR-BILDES
AMÉLIORATION SPATIALE RÉGIONALE D'UNE IMAGE RVB-IR

(43) Date of publication of application: 29.06.2022
(73) Proprietor: Smart Eye AB, 413 27 Göteborg (SE)
(72) Inventor: LIND, Henrik, 413 27 GÖTEBORG (SE); WILHELM, Torsten, 413 27 GÖTEBORG (SE)
(74) Representative: Lind Edlund Kenamets Intellectual Property AB

(56) References cited:
- US-A1- 2017 126 966
- THAVALENGAL SHEJIN ET AL: "Proof-of-concept and evaluation of a dual function visible/NIR camera for iris authentication in smartphones", IEEE TRANSACTIONS ON CONSUMER ELECTRONICS, IEEE SERVICE CENTER, NEW YORK, NY, US, vol. 61, no. 2, 1 May 2015 (2015-05-01), pages 137 - 143, XP011662558, ISSN: 0098-3063, [retrieved on 20150706], DOI: 10.1109/TCE.2015.7150566
- SHEELA S V ET AL: "Iris detection for gaze tracking using video frames", 2015 IEEE INTERNATIONAL ADVANCE COMPUTING CONFERENCE (IACC), IEEE, 12 June 2015 (2015-06-12), pages 629 - 633, XP033172931, DOI: 10.1109/IADCC.2015.7154783
- SHOPOVSKA IVANA ET AL: "Efficient Training Procedures for Multi-Spectral Demosaicing", vol. 20, no. 10, 17 May 2020 (2020-05-17), pages 1 - 23, XP055810706, Retrieved from the Internet <URL:https://europepmc.org/backend/ptpmcrender.fcgi?accid=PMC7287920&blobtype=pdf> [retrieved on 20210606], DOI: 10.3390/s20102850
- AVIZZANO CARLO ALBERTO ET AL: "Real-Time Embedded Vision System for the Watchfulness Analysis of Train Drivers", IEEE TRANSACTIONS ON INTELLIGENT TRANSPORTATION SYSTEMS, IEEE, PISCATAWAY, NJ, USA, vol. 22, no. 1, 6 December 2019 (2019-12-06), pages 208 - 218, XP011827357, ISSN: 1524-9050, [retrieved on 20201224], DOI: 10.1109/TITS.2019.2955787

## Description

### Field of the invention

The present invention relates to eye tracking using an RGB-IR sensor having Red, Blue, Green and Infrared dyes arranged in a modified Bayer pattern.

### Background of the invention

RGB-IR sensors are becoming increasingly popular for various applications, including automotive imaging. The article "Color Correction for RGB sensors with Dual-Band Filters for In-Cabin Imaging Applications" by Skorka et al., Society for Imaging Science and Technology, 2019, discusses color correction using such a CMOS RGB-IR sensor. As mentioned in the article, classical demosaicing (which is referred to as debayering in the context of a standard RGB sensor) needs to be slightly modified, in order to allow generate a full resolution image from the raw data from the CMOS sensor. Specifically, the debayering is followed by an IR subtraction. Such modified demosaicing is typically implemented in hardware, as part of the imaging pipeline of the CMOS chip.

An alternative to the demosaicing discussed by Skorka is described in the article "Learning based demosaicing and color correction for RGB-IR patterned image sensors", by Navinprashath, et al., Society for Imaging Science and Technology, 2019. Here, a neural network is trained to provide a higher resolution RGB image (without influence from the IR pixels) given an image acquired by a RGB-IR sensor.

A prototype device for iris biometrics equipped with a single image sensor with both visible and NIR sensing capabilities is presented in the study of Thavalengal Shejin et al.: "Proof-of-concept and evaluation of a dual function visible/NIR camera for iris authentication in smartphones", IEEE Transactions on Consumer Electronics, vol. 61, no. 2, pp. 137-143, May 2015.

Demosaicing of color and near-infrared bands relying on a convolutional neural network is proposed in the study of Shopovska Ivana et al.: "Efficient Training Procedures for Multi-Spectral Demosaicing", Sensors, vol. 20, no. 10, published 17 May 2020.

Also for eye-tracking applications it may sometimes be desirable to use an RGB-IR sensor, e.g. for increased versatility. In such applications, the eye tracker will preferably use an image acquired with IR illumination, in order to avoid interference from surrounding light. However, the demosaicing implemented in the sensor, e.g. of the kind discussed in Skorka's article, does not provide a high resolution IR image. The available IR image therefore limits the resolution for provision of precision eye and eye-lid tracking.

The approach discussed in Navinprashath's article allows software implemented demosaicing of the RGB-IR image. However, Navinprashath does not teach providing an enhanced IR image, which is ideally required by the eye tracking system. Also, such software processing would consume significant amounts of processing power, making it difficult to perform in real-time with available processing resources.

Consequently, there is a need for an improved eye tracking approach, taking even better advantage of available RGB-IR sensors.

### General disclosure of the invention

According to a first aspect of the invention, this and other objects are achieved by a method for eye tracking according to claim 1.

According to a second aspect of the invention, this and other objects are achieved by an eye tracking system according to claim 8

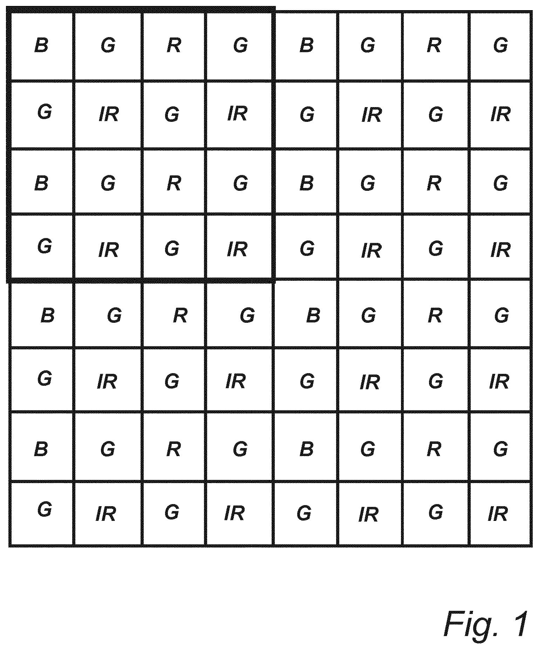

By "modified Bayer pattern" is intended a pattern described in the article "Color Correction for RGB sensors with Dual-Band Filters for In-Cabin Imaging Applications" by Skorka et al., Society for Imaging Science and Technology, 2019. This pattern is illustrated in figure 1, and includes alternating groups of four pixels, each group having one IR pixel, two green pixels, and a fourth pixel which is alternatingly red and blue. By "pixel" is intended a light sensor element, typically formed by a metal oxide semiconductor dye, covered by a light filter. The filter may be IR, red, green or blue. In some applications, the red, green and blue filters are also transparent to IR.

With this approach, head tracking is used to identify a smaller region of the RGB-IR image, and this limited region is then processed to provide an enhanced IR image. This means that the processing can be performed in real-time without requiring more processing power than what is already available in the system.

The IR regional demosaicing is preferably performed by applying a convolutional network to the RGB-IR image frame, where the convolutional network being trained to predict an enhanced IR-image given an RGB-IR image allowing the spatial information of all pixels including the glint to be recreated as a combination of all pixels.

It is noted that such an approach is slightly different from the approach by Navinpashath et al, where an accurate RGB image was predicted from the RGB-IR image. In the present inventive concept, an enhanced IR image is predicted by the neural network.

The convolutional network may include a plurality of layers, e.g. four layers, and may have a 3x3 kernel. Such a network has shown to be adequate for the present application. The convolutional network can be ground truth trained using pairs of IR images and RGB-IR images acquired from a set of objects.

In one embodiment, only the IR pixels are used for identifying head tracking features and performing head tracking. In another embodiment, the IR pixels and the RGB pixels are used to provide a full resolution image, which is used for identifying head tracking features and performing head tracking.

### Brief description of the drawings

The present invention will be described in more detail with reference to the appended drawings, showing currently preferred embodiments of the invention.
Figure 1 shows one type of modified Bayer pattern of an RGB-IR sensor.
Figure 2 shows very schematically a system according to an embodiment of the invention.
Figure 3 shows a more detailed block diagram of the DMS and video conferencing system in figure 2.
Figure 4 shows a time-line for image acquisition using the system in figure 2.

### Detailed description of preferred embodiments

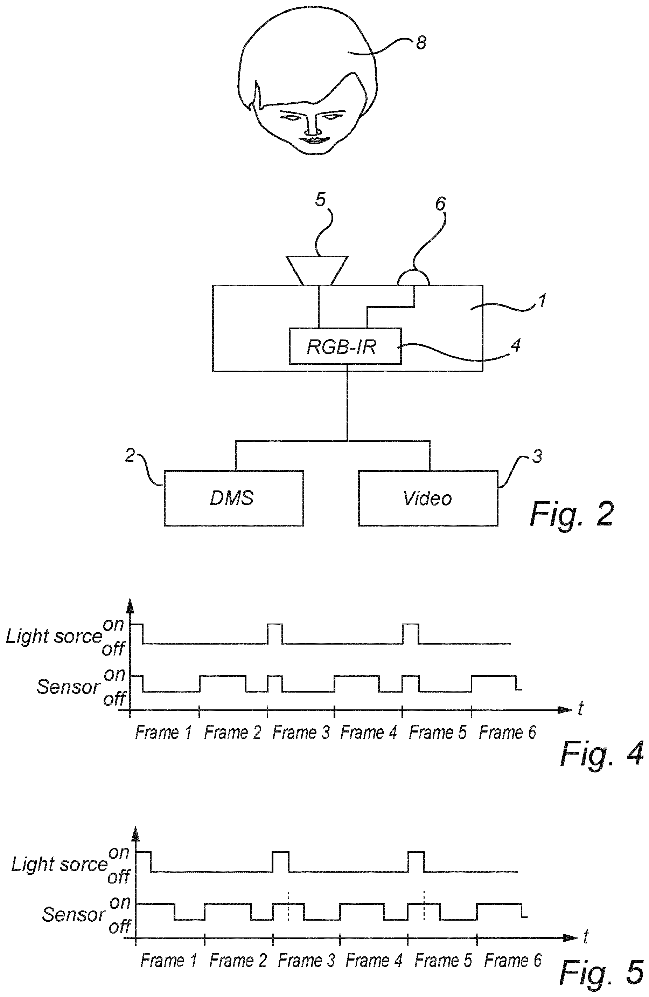

Embodiments of the present invention will be described with reference to a system as shown in figure 2. The system includes a camera device 1, a driver monitoring system (DMS) 2, and a video application such as a videoconferencing system 3 (or any other system requiring a color image). The camera device includes an RGB-IR image sensor 4 with associated optics 5 and a light source 6. The sensor 4 is set up by the DMS 2 and/or the video system 3 to acquire images of a required type and frame rate. The sensor 4 is connected to control the light source 6 to provide the required illumination. In the following example, the sensor will be programmed to provide images at a given frame rate (e.g. 60 Hz), where every other image (i.e. frame rate 30Hz) is acquired with illumination by the light source 6.

The light source is configured to emit near infra-red (NIR) light, e.g. with a wavelength around 850 nm or 940 nm. For simplicity we call this IR in the rest of the document. The longer wavelength is often preferred in automobile applications, due to the lack of red glow. The light source can be configured with an additional illumination in the visible spectrum for colour video conferencing in night. During day the natural light provides this light source.

The RGB-IR sensor comprises a light sensitive sensor array, e.g. a CMOS sensor array where each pixel is a silicon photodiode. The sensor array is covered by a filter layer including red (R), green (G), blue (B) and infra-red (IR) dies, one per photosensitive pixel. The dies are typically arranged in a modified Bayer pattern, an example is shown in figure 1. Preferably, the RGB dies transmit also some IR light, while the IR dies do not transmit any visible RGB light. Such RGB-IR sensors are commercially available from ON Semiconductor Corp., OmniVision Technologies and others.

The RGB-IR sensor 4 may be covered by a bandpass filter configured to transmit both RGB light and IR light from the light source 5, and to block light there between. As an example, such a filter may have pass bands at approximately 370-670 nm (RGB) and 900-1000 nm (IR). This filter suppresses light with wave length of no use for the applications and allows a higher color fidelity for the video conference.

The RGB-IR sensor, depending on architecture, can be operated in at least three different ways; global shutter, global shutter with dual exposure, and rolling shutter.

In global shutter operation, all pixels of the sensor are exposed at the same time (globally). One image is acquired in each time frame, with or without IR illumination (flash). One image is preferably short with IR illumination and one image has a long exposure for use of video telephony. The second image can also be used for eye and eyelid tracking when illumination is sufficient.

In global shutter operation with dual exposure, two consecutive images are acquired in one time frame, one with and one without illumination (flash). The IR-images are then subtracted from each other, to generate an IR-image which is compensated for background illumination.

In rolling shutter operation, the rows (or columns) of the sensor are exposed sequentially in each time frame leading to a need for longer IR illumination.

In use, the device 1 is arranged in front of a user 8, e.g. a driver of a vehicle. The camera device 1 can be arranged in a vehicle (e.g. on the dash board) so that the camera device can acquire RGB-IR images of a driver 8 or the driver and passenger of the vehicle. with a wide fields of view lens

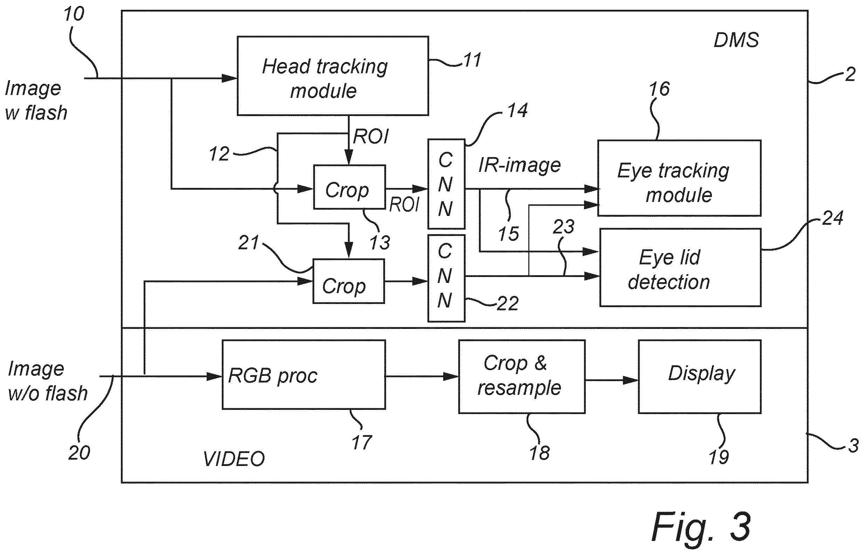

Figure 3 shows functional block diagrams of selected parts of the DMS 2 and the video conferencing system 3.

The DMS 2 comprises a head tracking module 11, connected to receive an RGB-IR image 10 acquired by the RGB-IR sensor under illumination of the light source 6. Based on the information in the image 10, the head tracking module 11 is configured to identify head features in the image 10, and to perform head tracking based on these features. The head-tracking serves to determine the orientation of the driver's head with respect to the camera device 1 (and thus the vehicle).

In one embodiment, the information used for the head tracking is only the IR pixels of the RGB-IR image 10. In this case the head tracking will be performed on a quarter resolution. In other embodiments, a full resolution image may be used, e.g. a black/white image obtained from the RGB-IR image.

The head tracking module 11 is further configured to identify a limited area 12 of the acquired image where the eyes of the user are located. This area may be significantly smaller than the complete image 10. A cropping block 13 is configured to receive the RGB-IR image 10 and an indication of the area 12, and to crop RGB-IR pixel information of the region 12 (referred to as a "region of interest", ROI).

The DMS 2 further comprises a convolutional neural network (CNN) 14 is trained to predict a spatially enhanced IR image 15 based on the region of interest. The CNN may include more than three layers, in the present case four layers, each with a 3x3 kernel. The CNN has been trained using ground truth data in the form of (high resolution) R-, G-, B- and IR-images acquired from an object, and a lower resolution RGB-IR image of the same object. In order to make the prediction more robust, noise may be added to the ground truth RGB-IR image.

The spatially enhanced IR image 15 is provided to an eye tracking module 16, configured to perform eye tracking. The eye tracking module may be of conventional design, and will not be described in more detail. The eye tracking module may also use the image from the block 22.

Turning now to the video system 3, it includes an RGB processing module 18, connected to receive a second RGB-IR image 20, acquired without NIR illumination. The output from the RGB-processing module is connected to a crop & resampling module 18, before being provided to a display unit 19. This processing is previously known in the art, and will not be described further herein.

In the embodiment in figure 3, the DMS 2 further comprises a second cropping block 21, connected to receive the second RGB-IR image 20 (without NIR illumination). The cropping block 21 also receives the area 12 from the head tracking module 11, so as to be able to output a limited region (region of interest) of the second image 20.

A second convolutional neural network (CNN) 22 is trained to predict a spatially enhanced image 23 based on the region of interest from the cropping block 21. The second CNN 22 may have the same design as the first CNN 14, and can be trained in a similar manner. In principle, it is possible to combine both CNN 14 and 22 in one single neural network, by providing suitable conditioning data as input together with the input image data.

The DMS 2 also includes an eye lid detection module 24, connected to receive the spatially enhanced images 15 and 23, and perform eye lid detection. Such eye lid detection is used, for example, to determine if a driver is showing signs of drowsiness, and is known in the art.

With continued reference to figure 3, and also to figure 4, operation of this embodiment of the invention will be described. Figure 4 illustrates activation signals (ON or OFF) 24, 26 for the RGB-IR sensor exposure 4 and the light source 6, respectively, over a series of time frames. The frame rate is typically 30-120, and often 60 Hz, but may of course be different depending on the implementation.

In a first frame, the processor 7 activates the light source 6, and simultaneously acquires an RGB-IR image with the sensor 4. This is illustrated in figure 4 by the signals 24 and 26 both are ON during a short duration. In the illustrated case, the duration of one frame is 16,7 ms (60 Hz), and the light source 6 and sensor 4 are active for about 100us to1 ms.

The acquired image 10 - or only the IR pixels - is provided to the head tracking module 11 of the DMS 2, and an ROI is selected by the cropping block 13 using area information 12 from the module 11. The CNN 14 then provides (predicts) a spatially enhanced IR image 15 which is used by the eye tracking module 16 to track the eyes of the driver.

In a second frame, the processor 7 controls the sensor 4 to acquire a second RGB-IR image 20, this time without NIR illumination. This is illustrated in figure 4 by the signal 24 being ON while the signal 26 stays OFF. The image acquisition period is typically longer in this case, e.g. around 1-10 ms.

The second image 20 is provided to the video system 3 for video processing and display.

In the present embodiment, in the first frame the spatially enhanced IR image 15 is also provided to the module 24 which performs eye lid detection. Further, in the second frame, the second image 20 is provided to the second cropping block 21 of the DMS 2. Based on the area information 12, the second cropping block 21 forms a second ROI, which is used as input by the second CNN 22, to predict a second spatially enhanced image 23. This second spatially enhanced image 23 is provided to the module 24 which again performs eye lid detection.

In the illustrated embodiment, the IR-based head tracking and the video display will be performed at half the frame rate (e.g. 30 Hz), as only every other frame is used for each process, respectively. However, the eye-lid detection can be performed at full frame rate (e.g. 60 Hz).

It is noted that the spatially enhanced image 23 may also be provided to the eye tracking module 16, thereby enabling also eye tracking in each frame. However, it is noted that the second image 20 is typically acquired with longer exposure time, and therefore is less sharp and may be susceptible to motion artifacts.

Turning now to figure 5, there is illustrated a slightly different control scheme suitable for a global shutter sensor with dual exposure, as mentioned above. In this case, two separate RGB-IR images are acquired in the first frame, one with NIR illumination and one without. This is illustrated in figure 5 by the signal 24 having being ON twice as long as the signal 26. The two RGB-IR images are subtracted (in the sensor hardware) to provide an ambient compensated IR image. The head tracking module can now operate on this ambient compensated IR image.

The person skilled in the art realizes that the present invention by no means is limited to the preferred embodiments described above. On the contrary, many modifications and variations are possible within the scope of the appended claims. For example, the determination of a region of interest by the head tracking module might not be required in every frame, but maybe less frequently. In principle, the selected area (ROI) may also be provided by some other process instead of a head tracking module. The inventive concept is simply to perform demosaicing of a limited area of the image, thereby reducing requirements on processing capacity.

## Claims

1. A method for eye tracking with a system comprising a light source (6) configured to emit IR or near IR light and an RGB-IR sensor (4) having Red, Blue, Green and Infrared dyes arranged in a modified Bayer pattern, the method comprising, in a first time frame:
acquiring a first image (10) of a target area using said RGB-IR sensor during illumination by the light source, said first image including a set of IR pixels containing information from said IR dyes, and a set of RGB pixels containing information from said red, blue and green dyes, respectively,
identifying head tracking features and performing head tracking using said first image,
identifying an eye region (12) in said first image based on the head tracking features,
performing demosaicing only of the eye region using IR pixels and RGB pixels in the eye region, to form a spatially enhanced IR image (15) of said eye region, and
performing eye tracking using said spatially enhanced IR image,
acquiring, in a second time frame, a second image (20) of the target area using said RGB-IR sensor without illumination by said light source,
identifying an eye region in said second image based on the head tracking features,
performing demosaicing of said eye region of said second image, to form a second spatially enhanced image (23) of said eye region, and
performing eye lid detection using said first spatially enhanced IR image (15) and said second spatially enhanced image (23).

2. The method according to claim 1, wherein the step of performing demosaicing includes applying a convolutional network (14, 22) to said RGB-IR image frame, said convolutional network being trained to predict an enhanced IR-image given an RGB-IR image.

3. The method according to claim 2, wherein the convolutional network (14) has a plurality of layers, preferably more than three layers, and a minimum 3x3 kernel.

4. The method according to claim 2 or 3, wherein the convolutional network (14) has been trained using an actual IR image

5. The method according to any one of the preceding claims, wherein the red, green and blue dyes are configured to also detect infrared light.

6. The method according to any one of the preceding claims, wherein only said IR pixels are used for identifying head tracking features and performing head tracking.

7. The method according to any one of claims 1-5, wherein said IR pixels and said RGB pixels are used to provide a full resolution image, said full resolution image used for identifying head tracking features and performing head tracking.

8. An eye tracking system comprising:
a light source (6) configured to emit IR or near IR light;
an RGB-IR sensor (4) having Red, Blue, Green and Infrared dyes arranged in a modified Bayer pattern, said sensor being configured to acquire, in a first frame, a first image (10) of a target area using said RGB-IR sensor during illumination by the light source, said first image including a set of IR pixels containing information from said IR dyes, and a set of RGB pixels containing information from said red, blue and green dyes, respectively, said sensor (4) further being configured to acquire, in a second time frame, a second image (20) of the target area using said RGB-IR sensor (4) without illumination by said light source;
a head tracking module (11) configured to identify head tracking features and performing head tracking using said first image (10);
a first cropping unit (13) for selecting an eye region in said first image based on the head tracking features;
a second cropping unit (21) for selecting an eye region in said second image based on the head tracking features; a first demosaicing module (14) configured to perform demosaicing of the selected eye region using IR pixels and RGB pixels in the eye region, to form a spatially enhanced IR image (15) of said eye region; and
a second demosaicing module (22) configured to perform demosaicing of said eye region of said second image, to form a second spatially enhanced image (23) of said eye region,
an eye tracking module (16) configured to perform eye tracking using said spatially enhanced IR image (15) and said second spatially enhanced image (23), and
an eye lid detection module (24) configured to perform eye lid detection using said spatially enhanced IR image (15) and said second spatially enhanced image (23).

9. A system according to claim 8, wherein the sensor (4) is programmed to provide images at a given frame rate, where every other image is acquired with illumination by the light source (6).

10. The system according to claim 8 or 9, wherein the first and/or second demosaicing unit includes a convolutional network trained to predict an enhanced IR-image given an RGB-IR image.

11. The system according to claim 8 or 9 or 10, wherein the red, green and blue dyes are configured to also detect infrared light.

12. The system according to any one of claims 8-11, wherein the sensor (4) is one of a global shutter sensor and a rolling shutter sensor.

## Patentansprüche

1. Verfahren zur Blickverfolgung mit einem System, das eine Lichtquelle (6), die so konfiguriert ist, dass sie IR- oder Nah-IR-Licht emittiert, und einen RGB-IR-Sensor (4) umfasst, der Rot-, Blau-, Grün- und Infrarot-Farbstoffe aufweist, die in einem modifizierten Bayer-Muster angeordnet sind, wobei das Verfahren in einem ersten Zeitrahmen umfasst:
Erfassen eines ersten Bildes (10) eines Zielbereichs unter Verwendung des RGB-IR-Sensors während der Beleuchtung durch die Lichtquelle, wobei das erste Bild einen Satz von IR-Pixeln, die Informationen von den IR-Farbstoffen enthalten, und einen Satz von RGB-Pixeln, die entsprechend Informationen von den roten, blauen und grünen Farbstoffen enthalten, umfasst,
Identifizieren von Kopfverfolgungsmerkmalen und Durchführen einer Kopfverfolgung unter Verwendung des ersten Bildes,
Identifizieren eines Augenbereichs (12) in dem ersten Bild auf der Grundlage der Kopfverfolgungsmerkmale,
Durchführen einer Farbinterpolation ausschließlich in dem Augenbereich unter Verwendung von IR-Pixeln und RGB-Pixeln in dem Augenbereich, um ein räumlich verbessertes IR-Bild (15) des Augenbereichs zu erzeugen, und
Durchführen einer Blickverfolgung unter Verwendung des räumlich verbesserten IR-Bildes,
Erfassen, in einem zweiten Zeitrahmen, eines zweiten Bildes (20) des Zielbereichs unter Verwendung des RGB-IR-Sensors ohne Beleuchtung durch die Lichtquelle,
Identifizieren eines Augenbereichs in dem zweiten Bild auf der Grundlage der Kopfverfolgungsmerkmale,
Durchführen einer Farbinterpolation des Augenbereichs des zweiten Bildes, um ein zweites räumlich verbessertes Bild (23) des Augenbereichs zu erzeugen, und
Durchführen einer Augenlid-Erkennung unter Verwendung des ersten räumlich verbesserten IR-Bildes (15) und des zweiten räumlich verbesserten Bildes (23).

2. Verfahren nach Anspruch 1, wobei der Schritt von der Durchführung der Farbinterpolation die Anwendung eines Faltungsnetzwerks (14, 22) auf das RGB-IR-Einzelbild umfasst, wobei das Faltungsnetzwerk darauf trainiert ist, ausgehend von einem RGB-IR-Einzelbild ein verbessertes IR-Bild vorherzusagen.

3. Verfahren nach Anspruch 2, wobei das Faltungsnetzwerk (14) eine Mehrzahl von Schichten, vorzugsweise mehr als drei Schichten, und einen Kernel von mindestens 3×3 aufweist.

4. Verfahren nach Anspruch 2 oder 3, wobei das Faltungsnetzwerk (14) unter Verwendung eines tatsächlichen IR-Bildes trainiert wurde.

5. Verfahren nach einem der vorhergehenden Ansprüche, wobei die roten, grünen und blauen Farbstoffe so konfiguriert sind, dass sie auch Infrarotlicht erfassen.

6. Verfahren nach einem der vorhergehenden Ansprüche, wobei nur die IR-Pixel zur Identifizierung von Kopfverfolgungsmerkmalen und zur Durchführung von der Kopfverfolgung verwendet werden.

7. Verfahren nach einem der Ansprüche 1 bis 5, wobei die IR-Pixel und die RGB-Pixel verwendet werden, um ein Bild in voller Auflösung bereitzustellen, wobei das Bild in voller Auflösung zur Identifizierung von Kopfverfolgungsmerkmalen und zur Durchführung von der Kopfverfolgung verwendet wird.

8. System zur Blickverfolgung, umfassend:
eine Lichtquelle (6), die so konfiguriert ist, dass sie IR- oder Nah-IR-Licht emittiert;
ein RGB-IR-Sensor (4), der rote, blaue, grüne und infrarote Farbstoffe aufweist, die in einem modifizierten Bayer-Muster angeordnet sind, wobei der Sensor so konfiguriert ist, dass er, in einem ersten Einzelbild, ein erstes Bild (10) eines Zielbereichs unter Verwendung des RGB-IR-Sensors während der Beleuchtung durch die Lichtquelle erfasst, wobei das erste Bild eine Gruppe von IR-Pixeln umfasst, die Informationen von den IR-Farbstoffen enthalten, sowie eine Gruppe von RGB-Pixeln, die jeweils Informationen von den roten, blauen und grünen Farbstoffen enthalten, wobei der Sensor (4) ferner so konfiguriert ist, dass er, in einem zweiten Zeitrahmen, ein zweites Bild (20) des Zielbereichs unter Verwendung des RGB-IR-Sensors (4) ohne Beleuchtung durch die Lichtquelle erfasst; ein Kopfverfolgungsmodul (11), das so konfiguriert ist, dass es Kopfverfolgungsmerkmale identifiziert und unter Verwendung des ersten Bildes (10) eine Kopfverfolgung durchführt;
eine erste Zuschnitt-Einheit (13) zum Auswählen eines Augenbereichs in dem ersten Bild auf der Grundlage der Kopfverfolgungsmerkmale;
eine zweite Zuschnitt-Einheit (21) zum Auswählen eines Augenbereichs in dem zweiten Bild auf der Grundlage der Kopfverfolgungsmerkmale;
ein erstes Farbinterpolations-Modul (14), das so konfiguriert ist, dass es eine Farbinterpolation des ausgewählten Augenbereichs unter Verwendung von IR-Pixeln und RGB-Pixeln in dem Augenbereich durchführt, um ein räumlich verbessertes IR-Bild (15) des Augenbereichs zu erzeugen; und
ein zweites Farbinterpolations-Modul (22), das so konfiguriert ist, dass es eine Farbinterpolation des Augenbereichs von dem zweiten Bild durchführt, um ein zweites räumlich verbessertes Bild (23) des Augenbereichs zu erzeugen,
ein Blickverfolgungsmodul (16), das so konfiguriert ist, dass es eine Blickverfolgung unter Verwendung des räumlich verbesserten IR-Bildes (15) und des zweiten räumlich verbesserten Bildes (23) durchführt, und
ein Augenlid-Erkennungsmodul (24), das so konfiguriert ist, dass es eine Augenlid-Erkennung unter Verwendung des räumlich verbesserten IR-Bildes (15) und des zweiten räumlich verbesserten Bildes (23) durchführt.

9. System nach Anspruch 8, wobei der Sensor (4) so programmiert ist, dass er Bilder mit einer vorgegebenen Bildfrequenz liefert, wobei jedes zweite Bild unter Beleuchtung durch die Lichtquelle (6) aufgenommen wird.

10. System nach Anspruch 8 oder 9, wobei die erste und/oder zweite Farbinterpolations-Einheit ein Faltungsnetzwerk umfasst, das darauf trainiert ist, anhand eines RGB-IR-Bildes ein verbessertes IR-Bild vorherzusagen.

11. System nach Anspruch 8 oder 9 oder 10, wobei die roten, grünen und blauen Farbstoffe so konfiguriert sind, dass sie auch Infrarotlicht erfassen.

12. System nach einem der Ansprüche 8 bis 11, wobei der Sensor (4) einer von einem Global-Shutter-Sensor oder einem Rolling-Shutter-Sensor ist.

## Revendications

1. Procédé de suivi oculaire au moyen d'un système comprenant une source de lumière (6) configurée pour émettre une lumière IR ou proche IR et un capteur RGB-IR (4) ayant des colorants rouge, bleu, vert et infrarouge agencés dans une matrice de Bayer modifiée, le procédé comprenant, dans une première fenêtre temporelle :
l'acquisition d'une première image (10) d'une zone cible au moyen dudit capteur RGB-IR pendant l'éclairage par la source de lumière, ladite première image comprenant un ensemble de pixels IR contenant des informations provenant desdits colorants IR, et un ensemble de pixels RGB contenant des informations provenant desdits colorants rouge, bleu et vert, respectivement,
l'identification d'éléments de suivi de la tête et l'exécution d'un suivi de la tête au moyen de ladite première image,
l'identification d'une région oculaire (12) dans ladite première image, sur la base des éléments de suivi de la tête,
l'exécution d'un dématriçage uniquement de la région oculaire au moyen de pixels IR et de pixels RGB dans la région oculaire, afin de former une image IR spatialement améliorée (15) de ladite région oculaire, et
l'exécution d'un suivi oculaire au moyen de ladite image IR spatialement améliorée,
l'acquisition, dans une deuxième fenêtre temporelle, d'une deuxième image (20) de la zone cible au moyen dudit capteur RGB-IR sans éclairage par ladite source de lumière,
l'identification d'une région oculaire dans ladite deuxième image sur la base des éléments de suivi de la tête,
l'exécution d'un dématriçage de ladite région oculaire de ladite deuxième image, afin de former une deuxième image spatialement améliorée (23) de ladite région oculaire, et
l'exécution d'une détection de paupières au moyen de ladite première image IR spatialement améliorée (15) et de la deuxième image spatialement améliorée (23).

2. Procédé selon la revendication 1, dans lequel l'étape d'exécution du dématriçage comprend l'application d'un réseau convolutif (14, 22) à ladite trame d'image RGB-IR, ledit réseau convolutif étant entraîné pour prédire une image IR améliorée à partir d'une image RGB-IR.

3. Procédé selon la revendication 2, dans lequel le réseau convolutif (14) comporte une pluralité de couches, de préférence plus de trois couches, et un noyau d'une taille minimale de 3x3.

4. Procédé selon la revendication 2 ou 3, dans lequel le réseau convolutif (14) a été entraîné au moyen d'une image IR réelle.

5. Procédé selon l'une quelconque des revendications précédentes, dans lequel les colorants rouge, vert et bleu sont configurés pour détecter également la lumière infrarouge.

6. Procédé selon l'une quelconque des revendications précédentes, dans lequel seuls lesdits pixels IR sont utilisés pour identifier des éléments de suivi de la tête et exécuter le suivi de la tête.

7. Procédé selon l'une quelconque des revendications 1 à 5, dans lequel lesdits pixels IR et lesdits pixels RGB sont utilisés pour fournir une image pleine résolution utilisée pour identifier des éléments de suivi de la tête et exécuter le suivi de la tête.

8. Système de suivi oculaire comprenant :
une source de lumière (6) configurée pour émettre une lumière IR ou proche IR ;
un capteur RGB-IR (4) ayant des colorants rouge, bleu, vert et infrarouges agencés dans une matrice de Bayer modifiée, ledit capteur étant configuré pour acquérir, dans une première fenêtre, une première image (10) d'une zone cible, au moyen dudit capteur RGB-IR pendant l'éclairage par la source de lumière, ladite première image comprenant un ensemble de pixels IR contenant des informations provenant desdits colorants IR, et un ensemble de pixels RGB contenant des informations provenant desdits colorants rouge, bleu et vert, respectivement, ledit capteur (4) étant en outre configuré pour acquérir, dans une deuxième fenêtre temporelle, une deuxième image (20) de la zone cible au moyen dudit capteur RGB-IR (4) sans éclairage par ladite source de lumière ;
un module de suivi de la tête (11) configuré pour identifier des éléments de suivi de la tête et pour exécuter un suivi de la tête au moyen de ladite première image (10) ;
une première unité de recadrage (13) destinée à sélectionner une région oculaire dans ladite première image sur la base des éléments de suivi de la tête ;
une deuxième unité de recadrage (21) destinée à sélectionner une région oculaire dans ladite deuxième image sur la base des éléments de suivi de la tête ;
un premier module de dématriçage (14) configuré pour exécuter un dématriçage de la région oculaire sélectionnée au moyen de pixels IR et de pixels RGB dans la région oculaire, afin de former une image IR spatialement améliorée (15) de ladite région oculaire ; et
un deuxième module de dématriçage (22) configuré pour exécuter un dématriçage de la région oculaire de ladite deuxième image, afin de former une deuxième image spatialement améliorée (23) de ladite région oculaire,
un module de suivi oculaire (16) configuré pour exécuter un suivi oculaire au moyen de ladite image IR spatialement améliorée (15) et de ladite image spatialement améliorée (23), et
un module de détection des paupières (24) configuré pour exécuter une détection des paupières au moyen de ladite image IR spatialement améliorée (15) et de ladite image spatialement améliorée (23).

9. Système selon la revendication 8, dans lequel le capteur (4) est programmé pour fournir des images à une fréquence de trame donnée, où une image sur deux est acquise avec un éclairage par la source de lumière (6).

10. Système selon la revendication 8 ou 9, dans lequel la première et/ou la deuxième unité de dématriçage comprennent un réseau convolutif entraîné pour prédire une image IR améliorée à partir d'une image RGB-IR.

11. Système selon la revendication 8 ou 9 ou 10, dans lequel les colorants rouge, vert et bleu sont configurés pour détecter également la lumière infrarouge.

12. Système selon l'une quelconque des revendications 8 à 11, dans lequel le capteur (4) est l'un parmi un capteur à obturateur global et un capteur à obturateur roulant.
